# EUROPEAN PATENT SPECIFICATION

(11) **EP 3 499 326 B1**
(45) Date of publication and mention of the grant of the patent: **15.06.2022**
(21) Application number: 18211514.7
(22) Date of filing: 11.12.2018
(51) Int. Cl.: G05B 19/042, G08C 19/22

(54) **DRIVING SYSTEM FOR A THERMOREGULATION SYSTEM**
ANTRIEBSSYSTEM FÜR EIN THERMOREGULIERENDES SYSTEM
SYSTÈME DE COMMANDE POUR UN SYSTÈME DE THERMORÉGULATION

(30) Priority: 14.12.2017 IT 201700144606
(43) Date of publication of application: 19.06.2019
(73) Proprietor: Olmo Electronic Controls S.r.l., 24126 Bergamo (IT)
(72) Inventor: SEVERI, Ferdinando, 27020 Torre d'Isola (PV) (IT)
(74) Representative: Ferrari, Barbara

(56) References cited:
- US-A1- 2014 139 325
- US-A1- 2014 373 632
- US-A1- 2016 266 560

## Description

### Field of application

The present invention relates to a driving system for a thermoregulation system.

In particular, the invention relates, but not exclusively, to a driving system comprising a generator and a receiver which are respectively connected with a sensor device and an actuator device of a thermoregulation system and the following description is made with reference to this field of application with the sole aim of simplifying the presentation thereof.

### Prior art

As it is known, the need of adjusting the temperature arises overwhelmingly at different levels, in particular in the industrial sector and in the residential sector, but also in the public sector, like in the case of public buildings such as hospitals or schools. More particularly, there are thermoregulation systems capable of cooling or heating an environment, which can be a circumscribed environment like in the case of a household appliance or a larger environment, such as a cold room or a room, up to entire flats, buildings.

Among the thermoregulation systems for example, refrigeration systems, air heating systems using a fandeck or fancoil, ventilation systems may be considered.

It is also well known that the refrigeration of an environment is essentially based on a compression and decompression cycle of a refrigerant fluid, also referred to as refrigeration cycle.

More particularly, a compressor is essentially used to compress said refrigerant fluid, in order to increase its temperature as a result of the reduction in its volume; the compressed fluid, i.e. pressurized fluid, is then sent to a heat exchanger, suitably external to the environment to be refrigerated, where the compressed fluid loses heat, returning to room temperature.

Once cooled, the pressurized fluid passes into a further heat exchanger, internal to the environment to be refrigerated, where it is expanded, so as to return to atmospheric pressure.

Finally, once the fluid has passed through the internal heat exchanger, now at room pressure i.e. under the initial conditions, it returns to the compressor to start a new cycle.

Depending on the particular used fluid, condensation may occur, i.e. the transition from a gaseous phase to a liquid phase, in this case the heat exchanger being more properly a condenser.

The above described refrigeration cycle is usually controlled, for instance interrupted by a thermostat. More particularly, the thermostat generally provides switching off the compressor when a preset temperature is reached inside the environment to be refrigerated.

In its more general form, such a thermostat is thus a generator of a control signal adapted to be received by a receiver arranged in the compressor and consequently to drive the operation thereof. In the most recent applications, the thermostat, i.e. the generator of the control signal, is of the electronic type and normally uses a microprocessor or microcontroller, which allows a more effective control non only of the compressor, but also of the thermoregulation system, for instance refrigeration, in which said compressor is inserted, such as for instance a fridge. In this case, also the receiver comprises a microprocessor or microcontroller, for managing the received control signal and consequently for driving the compressor and possibly other functions of the refrigeration system which comprises it.

In particular, in the residential refrigeration sector, for example in case of fridges, freezers, wine cellars or anyway generally refrigerating household appliances, it is known to control the rotation speed of the household appliance compressor motor by means of a frequency control signal generated by a thermostat dedicated and integrated in the household appliance itself, said motor being usually a variable-speed motor.

More particularly, said control signal usually has a voltage level between 5V and 10V with a duty cycle of about 50% and a frequency selected in the range between about 50 Hertz and 150 Hertz.

Instead, in case of a refrigeration system of the industrial type, which also comprises a fan onboard, a voltage control signal is normally used.

In the USA, the control signal generally has a fixed voltage value, for instance equal to 5V, and a variable duty cycle value, the motor speed being proportional to the duty cycle of the signal itself.

On the contrary, in Europe the control signal generated by the thermostat has a voltage level varying from 0V to 10V and in this case the motor speed is proportional to said variable voltage level.

A thermostat is normally used also for adjusting heating systems, both domestic and industrial, with solutions analogous to the above described ones for the refrigeration systems.

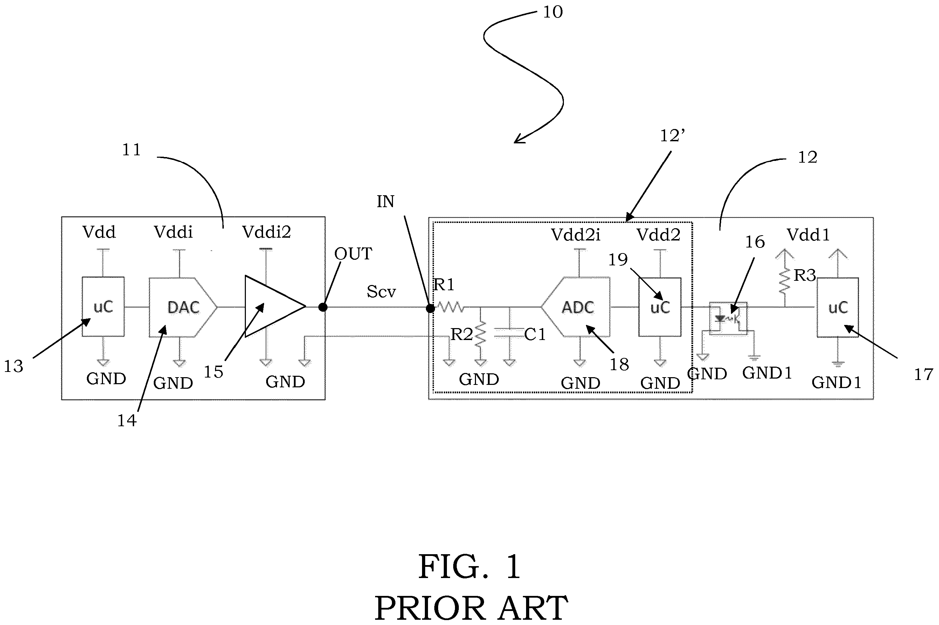

A driving system of the known type for a thermoregulation system using a variable-voltage control signal, is schematically illustrated in Figure 1 and wholly indicated with 10.

More particularly, the driving system 10 comprises a generator 11 and a receiver 12. As previously seen, the generator 11 may be integrated in a thermostat, in particular of the electronic type, and the receiver 12 may be connected to a motor of a thermoregulation system, for instance adapted to start a compressor of a refrigerant fluid or a fan. As indicated, the generator 11 transmit a control signal to the receiver 12, in particular having a fixed frequency value and a variable voltage value between 0 and 10V, which is thus indicated as voltage control signal Scv.

As illustrated in the example shown in Figure 1, the generator 11 may comprise a microcontroller 13 suitably inserted between a first supply voltage reference Vdd and a first ground reference GND. The microcontroller 13 is connected to a Digital to Analog Converter or DAC 14, which is in turn connected to the first ground reference GND and supplied by a first isolated supply voltage reference Vddi. The generator 11 thus comprises a voltage amplifier 15, connected in cascade with the DAC converter 14 and adapted to provide the voltage control signal Scv at an output terminal OUT.

Usually, the first supply voltage reference Vdd and the first isolated supply voltage reference Vddi have a same voltage value.

In particular, the voltage amplifier 15 is connected to the first ground reference GND and supplied by a second isolated supply voltage reference Vddi2, having a value greater than the first isolated supply voltage reference Vddi, in particular greater than 10V, even just slightly, in order to ensure that the voltage value of the voltage control signal Scv may vary from 0 to 10V.

Indeed, it is well known that the generation of a signal having a voltage value varying between 0-10V needs a specific supply voltage, the second isolated supply voltage reference Vddi2 having a value greater than the maximum generable 10V, even just slightly; furthermore, since such a signal 0-10V is potentially accessible by the user, for such a supply it is also necessary to provide isolation features such as to allow a proper safety level. In particular, the modulation of the voltage control signal is carried out through the DAC converter 14 which is connected to the microcontroller 13, limited to the maximum voltage value that can be managed by the microcontroller itself, namely the first isolated supply voltage reference Vddi, whose value is equal to the first supply voltage reference Vdd but of the isolated type, precisely, the signal being thus amplified at the desired voltage level thanks to the amplifier 15.

Likewise, the receiver 12 comprises a section 12' galvanically isolated from the rest of the circuitry by means of a galvanic decoupler 16, for instance an optocoupler, connected to a microcontroller 17, which is in turn inserted between a supply voltage reference, in particular a second supply voltage reference Vdd1, and a second ground reference GND1. In this case, a decoupling or pull up resistor R3 is connected between the galvanic decoupler 16 and the microcontroller 17 and is connected to the second voltage reference Vdd1.

In case of a galvanic decoupler 16 realized by means of a galvanic optocoupler, also called optoelectronic coupler, it is possible to ensure a very high isolation degree. Indeed, it is well known that such a galvanic optocoupler is an electronic component essentially comprising a radiation emitting diode or photodiode and a photosensitive element, in particular a phototransistor, having corresponding spectral responses, enclosed within a single container. In particular, the excitation of the photodiode involves the emission of radiations that become an activation signal of the phototransistor. In this way, the purely photonic coupling that is determined between an input portion, comprising the photodiode, and an output portion, comprising the phototransistor, ensures a very high isolation degree between the two portions.

Alternatively, it is possible to use a coupling of the capacitive, magnetic, or giant magnetoresistance (GMR) type.

More particularly, section 12' comprises a resistive divider comprising a first resistor R1 and a second resistor R2, which are connected in series to each other between an input terminal IN receiving the voltage control signal Scv and the first ground reference GND, and a condenser C1 inserted in parallel to the second resistor R2 and connected to an input of an Analog to Digital Converter or ADC 18. The resistive divider R1, R2 allows adjusting the level of the voltage control signal Scv entering the converter ADC 18, which is in turn connected to the first ground reference GND and supplied by a third isolated supply voltage reference Vdd2i.

The ADC converter converts the voltage control signal Scv, which is an analog signal, into a numerical value and sends it to a microcontroller 19, suitably connected between a third supply voltage reference Vdd2 and the first ground reference GND.

Usually, the third supply voltage reference Vdd2 and the third isolated supply voltage reference Vdd2i have a same voltage value.

The microcontroller 19 thus transmits the control signal converted through the galvanic decoupler 16 to the microcontroller 17, which uses it to control the operation of a motor, in particular inside a thermoregulation system such as an air conditioning system.

Suitably, the galvanic decoupler 16 is thus connected to the first and to the second ground references GND, GND1, in particular at the two portions of an optocoupler that makes it.

The above illustrated architecture for the driving system 10 realized according to the prior art thus allows using a voltage control signal having a variable value between 0-10V, generated for instance by a thermostat comprising the generator 11, and safely providing it to the receiver 12 of a thermoregulation system, so as to adjust the operation of a motor therein comprised and to obtain a temperature desired inside a household appliance or a domestic or public environment.

Although advantageous under several aspects, the known above described driving system has a high sensitivity to disturbances and parasites of the connection cable between the generator and the receiver. In particular, it occurs that disturbances on the communication line or attenuations and filtering due to cable parasites may cause voltage level variations of the voltage control signal, which therefore result in errors in the speed value set by means of the generator and therefore in malfunctions of the thermoregulation system which includes said driving system.

Furthermore, it is clear that the driving system realized according to the prior art requires the use of a large number of components and of two voltage references of the isolated type, one also having a high value, in particular greater than 10V, with a circuit complication not only at the generator level but also at the receiver level of said driving system using a voltage control signal having a value varying between 0-10V.

The presence of a large number of circuit components, some of which are particular delicate, obviously involves an increase in the realization costs for the electronic control boards adapted to implement the driving system, in addition to decreasing the useful life thereof and increasing the possibility of occurrence of operation errors.

US 2014/0139325 to Griebel et al. discloses a process for transfer of signals is provided between a first control unit and at least a second control unit, using PWM signals that are encoded in order to creates subsequent control instruction. In this manner, communication can be conducted, even without a data bus, where PWM outputs and PWM inputs are available, which can be implemented at low cost.

The technical problem of the present invention is to provide a driving system for a thermoregulation system, having structural and functional features such as to overcome the limitations of the systems realized according to the prior art, in particular able to ensure a correct generation and reception of a control signal with a limited number of circuit components and with an architecture less sensitive to disturbances and parasites of the connection cable.

### Summary of the invention

The solution idea underlying the present invention is to realize a driving system comprising a generator and a receiver and use a variable-frequency control signal generated by the generator connected to a sensor device and provided to the receiver connected to an actuator device of a thermoregulation system, for adjusting the operation of said actuator device based on the detections carried out by the sensor device. In particular, the sensor device may be a thermostat comprising the generator and the actuator device may be a motor of a compressor or of a fan, the generator and the receiver being integrated in respective electronic control boards of said devices.

Based on said solution idea, the technical problem is solved by a driving system of the type comprising at least one generator and a receiver, the generator providing a control signal for the receiver, the generator and the receiver comprising respective microcontrollers and being respectively connectable to sensor and actuator devices of a thermoregulation system controlled by means of said driving system, the control signal being a frequency control signal and the generator comprising at least one frequency signal generation circuit adapted to provide the frequency control signal at an output terminal thereof connected to an input terminal of the receiver, the frequency control signal adjusting the operation of an actuator device connected to the receiver based on the signals detected by and/or introduced into the sensor device connected to the generator thanks to a transmitted information encoding based on a rising and falling edges switching frequency of the frequency control signal, the receiver further comprises a galvanic portion in turn comprising a galvanic decoupler inserted between the input terminal and a first terminal of the microcontroller of the receiver, the galvanic decoupler being connected to the input terminal by means of a safety resistor and being connected to a first ground reference and to a second ground reference, and a further galvanic decoupler having a switch function, which is connected with the galvanic decoupler and with the microcontroller of the receiver, thus providing a bidirectional communication between the generator and the receiver, by disconnecting the further galvanic decoupler and interrupting a current passage between the generator and the receiver in the presence of an alarm situation of the actuator device.

More particularly, the invention comprises the following additional and optional features, taken singularly or in combination if necessary.

According to another aspect of the invention, the further galvanic decoupler is connected to the galvanic decoupler at a circuit node and, by means of a further safety resistor, to a second terminal of the microcontroller, the further galvanic decoupler being also connected to the first and to the second ground references.

More particularly, the galvanic decoupler may be a galvanic optocoupler comprising a photodiode connected to the input terminal by means of the safety resistor and to the circuit node and a phototransistor connected to the first terminal of the microcontroller and to the second ground reference.

Similarly, the further galvanic decoupler may be a galvanic optocoupler comprising a phototransistor connected to the circuit node and to the first ground reference and a photodiode connected to the second terminal of the microcontroller by means of the further safety resistor and to the second ground reference.

According to another aspect of the invention, the frequency signal generation circuit may be comprised in the microcontroller of the generator.

Furthermore, according to another aspect of the invention, the microcontroller of the generator may be inserted between a first supply voltage reference and a first ground reference and the microcontroller of the receiver may be inserted between a second supply voltage reference and a second ground reference.

According to another aspect of the invention, the generator may further comprise a duty cycle regulation circuit able to vary the duty cycle of the frequency control signal prior to providing it onto the output terminal in order to transmit a plurality of data from the generator to the receiver.

In particular, the duty cycle regulation circuit may be comprised in the microcontroller of the generator.

According to a further aspect of the invention, the generator may apply an encoding protocol of the frequency control signal based on a variation of its duty cycle, able to associate different codes or numerical values with different duty cycle ranges and correspondingly with different operations performed by the receiver.

Furthermore, according to an aspect of the invention, the generator may further comprise a current generator, inserted between the microcontroller and the output terminal to current drive the frequency control signal, said current generator being connected between an isolated supply voltage reference and a first ground reference.

According to a further aspect of the invention, the frequency control signal generated by the generator may be sent to a plurality of receivers, connected to a plurality of actuator devices of the thermoregulation system controlled by the driving system.

The technical problem is also solved by a thermoregulation system comprising at least one sensor device connected to an actuator device and controlled by a driving system of the above indicated type, the sensor device being connected to the generator and the actuator device being connected to the receiver.

According to another aspect of the invention, the sensor device may be selected among a thermostat, a control unit adapted to receive manual commands and/or based on a pre-set programming, a computer and the actuator device may be selected among a motor of a compressor, of a fan, of a fan-vane orientation regulator.

Still according to another aspect of the invention, the generator and the receiver of the driving system are integrated respective electronic control boards of the sensor device and of the actuator device.

Furthermore, the thermoregulation system may be selected among an air conditioning system, a heating system or a ventilation system, for domestic, industrial or public use.

Finally, the technical problem is solved by a control method of an actuator device of a thermoregulation system of the above described type based on the signals detected by and/or introduced into a sensor device of the thermoregulation system, said system comprising a driving system as above indicated, the method comprising the steps of:
- connecting the generator of the driving system to the sensor device of the thermoregulation system;
- connecting the receiver of the driving system to the actuator device of the thermoregulation system,
- providing a connection cable connected between the output terminal of the generator and the input terminal of the receiver,
- generating the frequency control signal at the output terminal of the generator based on the signals detected by and/or introduced into the sensor device connected to the generator;
- modifying the duty cycle value of the frequency control signal;
- transmitting the frequency control signal to the input terminal of the receiver to control the operation of the actuator device connected to the receiver; and
- interrupting the transmission of the frequency control signal in an alarm situation of the actuator device by interrupting a current passage between the generator and the receiver.

Finally, the step of generating the frequency control signal may comprise a current control step of the signal.

The features and advantages of the driving system according to the invention will be apparent from the description, made hereafter, of an embodiment thereof, given by indicative and non-limiting example, with reference to the accompanying drawings.

### Brief description of the drawings

In said drawings:
Figure 1: schematically shows a driving system for a thermoregulation system according to the prior art.
Figure 2: schematically shows a driving system for a thermoregulation system according to the present invention.
Figures 3, 4 and 5: schematically show alternative embodiments of the driving system according to the present invention.

### Detailed description

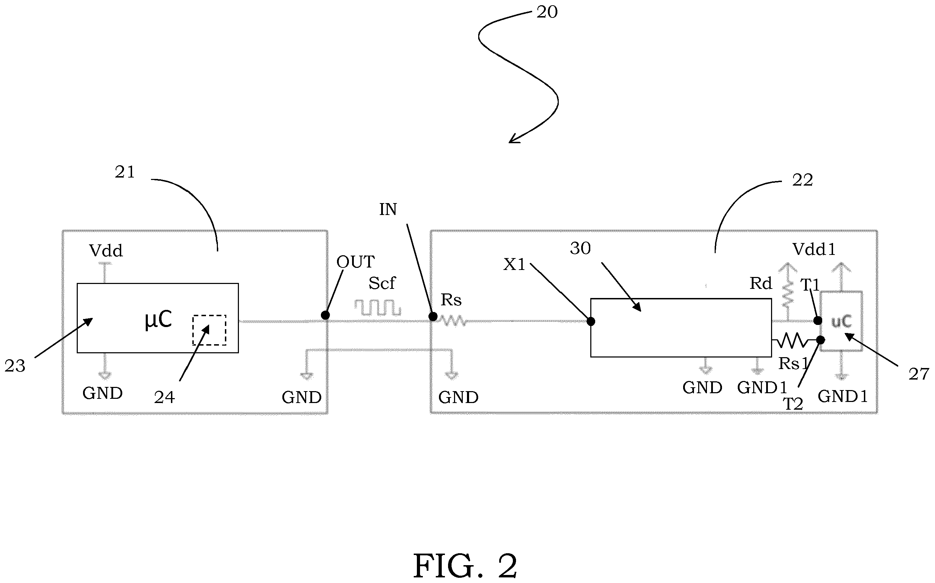

Referring to said figures, and particularly to Figure 2, a driving system of the type comprising a control signal generator provided to a regulator for controlling the operation of a thermoregulation system is described, said control signal being a frequency signal.

In particular, the generator is connected to a sensor device of the thermoregulation system, whereas the regulator is connected to an actuator device of said system, the generator and the receiver being integrated in respective electronic control boards of said devices. More particularly, the sensor device may be a thermostat or a control unit adapted to receive commands also from a user or a computer and the actuator device may be a motor of a compressor or of a fan or of a fan-vane orientation regulator of the thermoregulation system, which in turn may be an air conditioning system, an air heating system, for instance a fandeck or a fancoil, or a ventilation system, for domestic, industrial or public use. In this way, the signals detected by the sensor device may be performed by measuring appropriate parameters, such as the temperature, or by means of automatic receptions of commands, for instance for a periodic or manual programming, introduced for instance by a user, like it could be the setting of a temperature or the forcing of the power on, of the switching off or of a particular speed of an actuator device decided by the user. Furthermore, the control signal received by the actuator device may force the power on or the switching off thereof, or modify one or more of the operation parameters thereof, such as for instance a rotation speed of a fan or the inclination of the vanes thereof.

In his way, the frequency control signal generated by the generator is used to adjust the operation of the actuator device connected to the receiver based on signals detected by and/or introduced into the sensor device connected to the generator.

It is worth noticing that the figures show schematic views of the system according to the invention and are not drawn to scale, but instead they are drawn so as to enhance the important features of the invention. Furthermore, in the figures, the different elements are represented schematically, since their shape may vary according to the desired application. It is furthermore worth noticing that in the figures identical reference numbers refer to elements identical in shape and function. Finally, the different aspects of the invention represented by way of example in the figures can obviously be combined with each other and interchanged from an embodiment to another.

More particularly, the driving system, wholly indicated with 20, comprises, analogously to what has been seen for the known solutions, at least one generator 21, connected to a sensor device, for instance comprised in an electronic control board thereof, and a receiver 22 connected to an actuator device, for instance always comprised in an electronic control board thereof, of a thermoregulation system controlled by means of the driving system 20.

As illustrated in Figure 2, the generator 21 essentially comprises a microcontroller 23 and at least one frequency signal generation circuit 24 adapted to provide a frequency control signal Scf onto an output terminal OUT of the generator 21. In particular, the frequency control signal Scf is generated based on detections performed by the sensor device connected to the generator 21 or based on instructions thereinto inserted, automatically (for instance based on a sequence programming of preset operations) or manually by a user. In particular, said frequency control signal Scf is able to adjust the operation of the actuator device connected to the receiver 22 thanks to a transmitted information encoding based on a rising and falling edges switching frequency of the frequency control signal Scf itself.

More particularly, the microcontroller 23 is inserted between a first supply voltage reference Vdd and a first ground reference GND and is connected to the frequency signal generation circuit 24.

In a preferred embodiment, illustrated in Figure 2, the frequency signal generation circuit 24 is a part of the microcontroller 23, namely the microcontroller 23 is able to internally generate the frequency control signal Scf and to output provide it on the output terminal OUT.

Indeed, it is highlighted that, advantageously according to the present invention, any input/output port of the microcontroller 23 is able to generate a signal having a voltage level analogous to the supply voltage of the microcontroller to realize the frequency control signal Scf. In particular, it is possible to use a frequency control signal Scf with a voltage value equal to 3.3V or to 5V, power supply values typical of the digital electronic components, in particular of the microcontroller 23 or generally of the components of the electronic control board of the sensor device connected to the generator 21; however, nothing forbids using a signal with a different voltage value.

It is also highlighted that, in case of a frequency signal, the transmitted information encoding occurs not on the voltage levels which it reaches, but on the switching frequency of its rising and falling edges, thus turning out to be intrinsically immune to voltage level variations caused by disturbances on the communication line or by attenuations and filtering due to parasites of one or more connection cables between generator 21 and receiver 22.

In this case, as illustrated in Figure 2, the receiver 22 comprises a galvanic portion 30, connected by means of a safety resistor Rs to an input terminal IN of the receiver 22, from which it receives the frequency control signal Scf and transmits it to a microcontroller 27, connected in cascade with the galvanic portion 30 and inserted between a second supply voltage reference Vdd1, and a second ground reference GND1. In this case as well, the galvanic portion is connected to the first and to the second ground references GND, GND1. Suitably, the safety resistor Rs is used to adjust the current value which arrives at the galvanic portion 30 at a first circuit node XI, preventing it from burning.

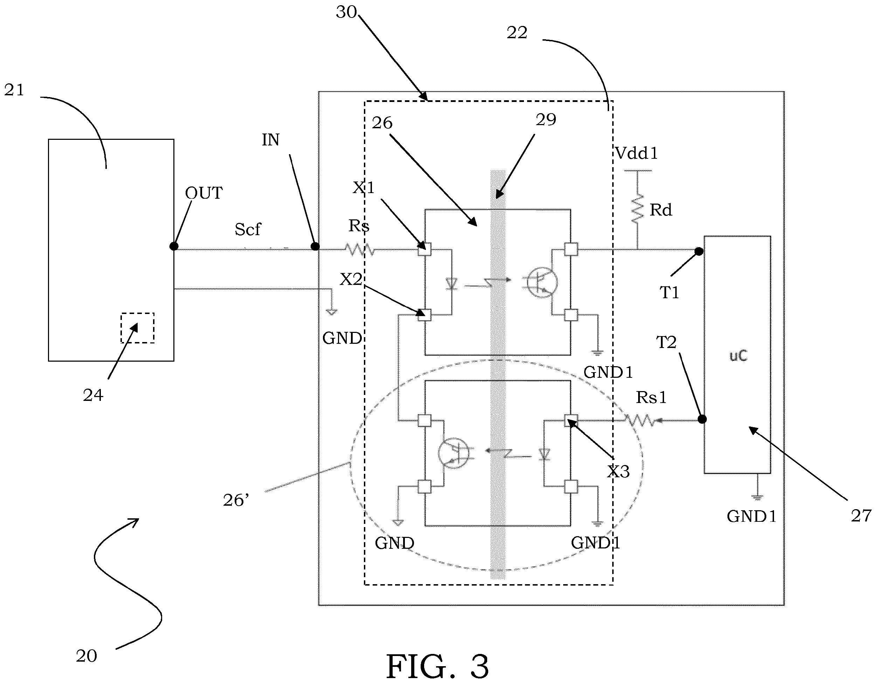

According to a preferred embodiment, schematically illustrated in Figure 3, the driving system 20 allows a communication not only between generator 21 and receiver 22, but also between receiver 22 and generator 21, namely a bidirectional communication between sensor device and actuator device of the thermoregulation system controlled by the driving system 20. In this way, it is possible to send to the generator 21, namely to the sensor device, information relating to the operation of the actuator device connected to the receiver 22. For instance, in this way it is possible to report an alarm situation, for instance due to a malfunction of the actuator device connected to the receiver 22.

According to this embodiment, the galvanic portion 30 comprises a galvanic decoupler 26 inserted between the input terminal IN of the receiver 22 and a first terminal T1 of its microcontroller 27. More particularly, the galvanic decoupler 26 is connected to the input terminal IN by means of the safety resistor Rs and is connected to the first and second ground references, GND and GND1.

The galvanic portion also comprises a further galvanic decoupler 26' with a switch function, connected with the galvanic decoupler 26 and, by means of a further safety resistor Rs1, to a second terminal T2 the microcontroller 27. A galvanic barrier 29 is thus defined by said decouplers.

As seen in connection with the prior art, the galvanic decouplers 26 and 26' may be realized by means of a galvanic optocoupler comprising a photodiode and a phototransistor.

More particularly, the receiver 22 comprises the galvanic decoupler 26 connected, by means of the safety resistor Rs, to the input terminal IN and to the first terminal T1 of the microcontroller 27, the galvanic decoupler 26 being also connected to the second ground reference GND1. In case the galvanic decoupler 26 is realized by means of a galvanic optocoupler 26, it comprises a photodiode connected to the input terminal IN by means of the safety resistor Rs and to a second circuit node X2, as well as a phototransistor connected to the first terminal T1 of the microcontroller 27 and to the second ground reference GND1.

The receiver 22 also comprises the further galvanic decoupler 26' connected to the galvanic decoupler 26 at the second circuit node X2 and, by means of the further safety resistor Rs1, to the second terminal T2 of the microcontroller 27 and is connected to the first and to the second ground references GND, GND1; also in this case, if the further galvanic decoupler 26' is realized by means of a galvanic optocoupler 26, it comprises a phototransistor connected to the second circuit node X2 and to the first ground reference GND, as well as a photodiode connected to the second ground reference GND1 and having a third circuit node X3 connected to the second terminal T2 of the microcontroller 27 by means of the further safety resistor Rs1.

The further galvanic decoupler 26' is thus driven by the microcontroller 27 at the non-isolated portion thereof, in particular its photodiode if realized by means of a galvanic optocoupler, so as to enable and/or interrupt the current passage and thus to operate as a switch.

Suitably, the disconnection of the further galvanic decoupler 26' with a switch function occurs in the presence of an alarm situation of the actuator device connected to the receiver 22, so as to report for instance a malfunction thereof to the generator 21 and thus to the sensor device.

Substantially, the driving system 20 as illustrated in Figure 3 allows a communication between sensor device and actuator device of the thermoregulation system controlled by the driving system 20.

The receiver 22 also comprises a decoupler resistor Rd connected between the second supply voltage reference Vdd1 and the first terminal T1 of the microcontroller 27.

It is thus immediately clear that the use of the frequency control signal Scf for controlling an actuator device of a thermoregulation system by means of the receiver 22 of the driving system 20 allows simplifying the architecture of the receiver 22 itself, which does not need a galvanically isolated circuit section adapted to ensure the electric safety of the receiver 22 and of the thermoregulation system as a whole, with a consequent simplification of the electronic control card of the actuator device connected to said receiver 22.

Suitably, the driving system 20 according to the present invention, thanks to the use of the frequency control signal Scf, allows more precise communications that are less susceptible to disturbances between generator 21 and receiver 22, requires a smaller number of components and therefore implies a reduction in the realization costs of the driving system 20 and of the single components thereof, with a consequent increase in the reliability of the electronic control boards of the sensor and actuator devices of the thermoregulation system controlled by means of said driving system 20.

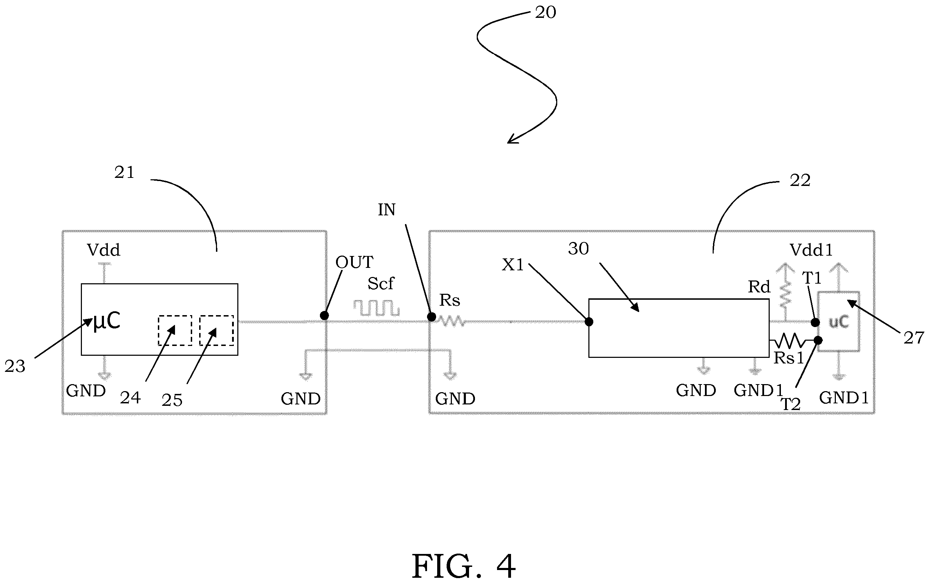

According to an alternative embodiment, schematically illustrated in Figure 4, the generator 21 may also comprise a duty cycle regulation circuit 25 able to vary the duty cycle of the frequency control signal Scf. As previously, the duty cycle regulation circuit 25 may be part of the microcontroller 23, namely the microcontroller 23 may be able to vary the duty cycle value of the frequency control signal Scf provided onto the output terminal OUT.

In particular, the variation of the duty cycle of the frequency control signal Scf allows the generator 21 to transmit a plurality of data to the receiver 22 and thus allows a complex driving of the electronic control board of the actuator device of the thermoregulation system controlled by the driving system 20.

More particularly, the variation of the duty cycle of the frequency control signal Scf provided by the generator 21 may be used to carry information, not only about the speed required to the actuator device connected to the receiver 22, but also other information such as, for instance, the beginning of a specific procedure of the thermoregulation system automatically controlled by the sensor device (for instance scheduled) or inserted manually by a user.

Suitably, the frequency control signal Scf may also be used to control different receivers 22, connected to different actuator devices of the thermoregulation system, such as for instance the motors of a plurality of compressors or fans.

Furthermore, thanks to the variation of the duty cycle of the frequency control signal Scf it is possible to define an encoding protocol of said signal, able to associate different codes or numerical values with different duty cycle ranges and correspondently with different operations performed by the receiver 22, even complex operations such as writing inside the registers of the microcontroller 27 or triggering procedures involving one or more actuator devices of the thermoregulation system. In particular, the encoding protocol is applied to the frequency control signal Scf by the generator 21, more particularly by its microcontroller 23.

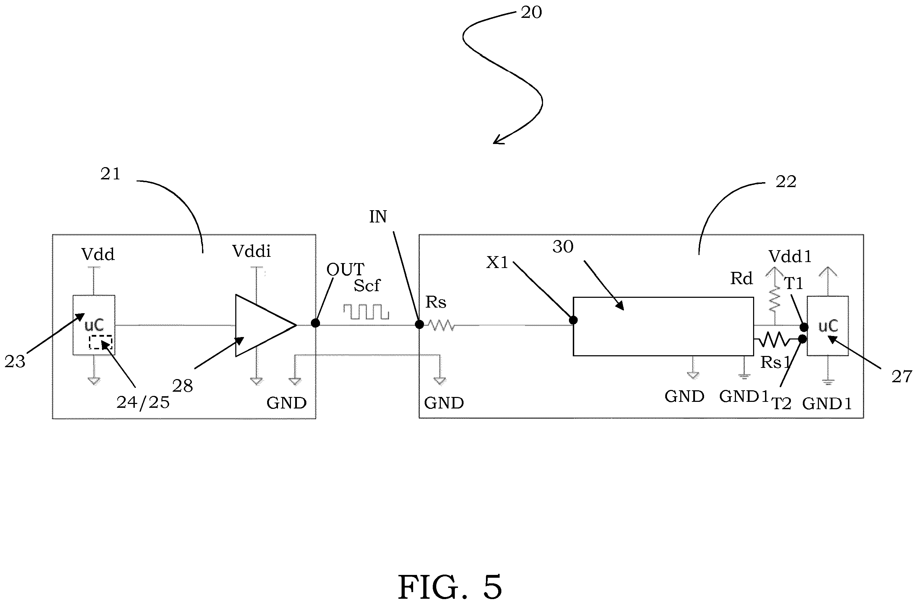

According to a further alternative embodiment, schematically illustrated in Figure 5, the generator 21 may also comprise a current generator 28, connected in cascade with the microcontroller 23 and in particular with the frequency signal generation circuit 24 and with the duty cycle regulation circuit 25, if any, so as to increase the ability of the generator 21 to supply current and make it able to also adequately drive cables with high capacitive parasites.

In this case, the frequency control signal Scf is current driven instead of voltage driven, with the current generator 28 connected between an isolated supply voltage reference Vddi, suitably isolated, and the first ground reference GND.

Usually, the first supply voltage reference Vdd and the isolated supply voltage reference Vddi of the generator 21 have a same voltage value.

It is highlighted that the use of the current generator 28 allows the generator 21 to detect a physical disconnection of the connection of the cable or cables with the receiver 22, in particular by monitoring the voltage produced on the frequency control signal Scf. Indeed, it is clear that, under normal conditions, i.e. in the presence of a correct connection performed by one or more cables between the generator 21 and the receiver 22, upon the power on of the current generator 28, the voltage produced on the frequency control signal Scf is equal to the drop onto the galvanic decoupler 26, in particular, in case of a galvanic optocoupler, directly onto its polarized photodiode thanks to the connection with the current generator 28 itself. In case of disconnection of one or more connection cables between generator 21 and receiver 22, even of only one of the connection cables in case there is a plurality of the same, the voltage value of the frequency control signal Scf increases until it arrives to values close to the voltage value of the isolated supply voltage reference Vddi.

The detection of a variation of the voltage value of the frequency control signal Scf thus allows reporting a malfunction of the connection between the generator 21 and the receiver 22 of the driving system 20, namely between the sensor device and the actuator device (one or more) of the thermoregulation system controlled by the driving system 20, namely an alarm situation.

In its more general form, the present invention also relates to a control method of an actuator device of a thermoregulation system comprising a driving system 20 of the type above illustrated, thanks to signals detected by and/or introduced into a sensor device of said system.

As previously seen, the sensor device may be a thermostat, or a control unit adapted to receive commands also from a user and the actuator device may be a motor of a compressor or of a fan of the thermoregulation system, which in turn may be an air conditioning system, a heating system or a ventilation system, for domestic, industrial or public use.

The control method comprises in particular the steps of:
- connecting a generator 21 of the driving system 20 to the sensor device, in particular integrating it into an electronic control board thereof;
- connecting a receiver 22 of the driving system 20 to the actuator device, in particular integrating it into an electronic control board thereof;
- providing a connection cable between generator 21 and receiver 22, in particular connected between an output terminal OUT of the generator 21 and an input terminal IN of the receiver 22.

The control method is suitably characterized by the steps of:
- generating a frequency control signal Scf at the output terminal OUT of the generator 21 based on signals detected by and/or introduced into the sensor device which is connected to it; and
- transmitting said frequency control signal Scf to the input terminal IN of the receiver 22 to control the operation of the actuator device which is connected to it.

As previously explained, the detections of the sensor device may also be commands automatically introduced thereinto, based for instance on a programming, or manually by a user.

Suitably, the control method also comprises a step of modifying the duty cycle value of the frequency control signal Scf prior to transmitting it to the input terminal IN of the receiver 22.

Furthermore, the step of generating the frequency control signal Scf may comprise a step of current controlling said signal.

Finally, the control method comprises a step of interrupting the transmission of the frequency control signal Scf in case of alarm situations, such as a malfunction of the actuator device by interrupting a current passage between the generator 21 and the receiver 22.

Suitably, the above explained control method, using a frequency control signal, may be implemented in a driving system which
requires a smaller number of components, and thus it implies a reduction in the realization costs of the devices that implement it with a consequent increase in the reliability of the electronic control boards therein included, meanwhile allowing communications which are more
precise and less susceptible to disturbances between generator and receiver.

In conclusion, the driving system according to the present invention and the control method implemented thereby, essentially thanks to the use of a frequency control signal, have the following advantages compared to the known solutions:
- greater cost-effectiveness and reliability of the system thus realized, in terms of individual components and of the system as a whole;
- greater insensitivity to parasites of connection cables between generator and receiver and total immunity to disturbances of the control signal used; as well as
- ability of information bidirectional transmission, so as to allow the generator to detect the disconnection of the connection with the receiver, for instance, by interrupting the transmission of the frequency control signal between generator and receiver in case of an alarm situation, such as a malfunction of the actuator device or taking other countermeasures with respect to other components of the system.

For instance, in an alarm situation in which a fan stop occurs, it is possible to drive an interruption of the compressor operation in order to avoid further damages to the thermoregulation system. Alternatively, in the presence of a plurality of valves, it is possible to increase the speed of the fans still working to compensate for the loss of flow due to the stopped fan.

Obviously, a person skilled in the art, in order to satisfy contingent and specific requirements, may make to the driving system and to the control method above described numerous modifications and variations, all included in the scope of the invention as defined by the following claims.

## Claims

1. Driving system (20) of the type comprising at least one generator (21) and a receiver (22), said generator (21) providing a control signal for said receiver (22), said generator (21) and said receiver (22) comprising respective microcontrollers (23, 27) and being respectively connectable to sensor and actuator devices of a thermoregulation system controlled by means of said driving system (20), said control signal being a frequency control signal (Scf) and said generator (21) comprising at least one frequency signal generation circuit (24) adapted to provide said frequency control signal (Scf) at an output terminal (OUT) thereof, which is connected to an input terminal (IN) of said receiver (22), said frequency control signal (Scf) adjusting the operation of an actuator device connected to said receiver (22) based on signals detected by and/or introduced into said sensor device connected to said generator (21) thanks to a transmitted information encoding based on a rising and falling edges switching frequency of said frequency control signal (Scf), **characterized in that** said receiver (22) further comprises a galvanic portion (30) in turn comprising a galvanic decoupler (26) inserted between said input terminal (IN) and a first terminal (T1) of said microcontroller (27) of said receiver (22), said galvanic decoupler (26) being connected to said input terminal (IN) by means of a safety resistor (Rs) and being connected to a first ground reference and to a second ground reference (GND, GND1) and a further galvanic decoupler (26') having a switch function, which is connected with said galvanic decoupler (26) and with said microcontroller (27) of said receiver (22), thus providing a bidirectional communication between said generator (21) and said receiver (22) by disconnecting said further galvanic decoupler (26') and interrupting a current passage between said generator (21) and said receiver (22) in the presence of an alarm situation of said actuator device.

2. Driving system (20) according to claim 1, **characterized in that** said further galvanic decoupler (26') is connected to said galvanic decoupler (26) at a circuit node (X2) and, by means of a further safety resistor (Rs1), to a second terminal (T2) of said microcontroller (27), said further galvanic decoupler (26') being also connected to said first and second ground references (GND, GND1).

3. Driving system (20) according to claim 2, **characterized in that** said galvanic decoupler (26) is a galvanic optocoupler comprising a photodiode connected to said input terminal (IN) by means of said safety resistor (Rs) and to said circuit node (X2) and a phototransistor connected to said first terminal (T1) of said microcontroller (27) and to said second ground reference (GND1).

4. Driving system (20) according to claim 3, **characterized in that** said further galvanic decoupler (26') is a galvanic optocoupler comprising a phototransistor connected to said circuit node (X2) and to said first ground reference (GND) and a photodiode connected to said second terminal (T2) of said microcontroller (27) by means of said further safety resistor (Rs1) and to said second ground reference (GND1).

5. Driving system (20) according to claim 1, **characterized in that** said frequency signal generation circuit (24) is comprised in said microcontroller (23) of said generator (21).

6. Driving system (20) according to claim 1, **characterized in that** said microcontroller (23) of said generator (21) is inserted between a first supply voltage reference (Vdd) and a first ground reference (GND) and said microcontroller (27) of said receiver (22) is inserted between a second supply voltage reference (Vdd1) and a second ground reference (GND1).

7. Driving system (20) according to any of the previous claims, **characterized in that** said generator (21) further comprises a duty cycle regulation circuit (25) able to vary the duty cycle of said frequency control signal (Scf) prior to providing it onto said output terminal (OUT) in order to transmit a plurality of data from said generator (21) to said receiver (22).

8. Driving system (20) according to claim 7, **characterized in that** said duty cycle regulation circuit (25) is comprised in said microcontroller (23) of said generator (21).

9. Driving system (20) according to claim 7 or 8, **characterized in that** said generator (21) applies an encoding protocol of said frequency control signal (Scf) based on a variation of its duty cycle, able to associate different codes or numerical values with different duty cycle ranges and correspondingly with different operations performed by said receiver (22).

10. Driving system (20) according to any of the previous claims, **characterized in that** said generator (21) further comprises a current generator (28), inserted between said microcontroller (23) and said output terminal (OUT) to current drive said frequency control signal (Scf), said current generator (28) being connected between an isolated supply voltage reference (Vddi) and a first ground reference (GND).

11. Driving system (20) according to any of the previous claims, **characterized in that** said frequency control signal (Scf) generated by said generator (21) is sent to a plurality of receivers (22), connected to a plurality of actuator devices of said thermoregulation system controlled by said driving system (20).

12. Thermoregulation system comprising at least one sensor device connected to an actuator device, **characterized in that** it comprises and is controlled by a driving system (20) according to any of the previous claims, said sensor device being connected to said generator (21) and said actuator device being connected to said receiver (22).

13. Thermoregulation system according to claim 12, **characterized in that** said sensor device is selected among a thermostat, a control unit adapted to receive manual commands and/or based on a pre-set programming, a computer and **in that** said actuator device is selected among a motor of a compressor, of a fan, of a fan-vane orientation regulator.

14. Thermoregulation system according to claim 12 or 13, **characterized in that** said generator (21) and said receiver (22) of said driving system (20) are integrated in respective electronic control boards of said sensor device and of said actuator device.

15. Control method for controlling an actuator device of a thermoregulation system according to one of claims 12 to 14 based on signals detected by and/or introduced into a sensor device of said thermoregulation system, said system comprising a driving system (20) according to one of claims 1 to 11, the method comprising the steps of:
- connecting said generator (21) of said driving system (20) to said sensor device of said thermoregulation system;
- connecting said receiver (22) of said driving system (20) to said actuator device of said thermoregulation system;
- providing a connection cable connected between said output terminal (OUT) of said generator (21) and said input terminal (IN) of said receiver (22),
- generating said frequency control signal (Scf) at said output terminal (OUT) of said generator (21) based on said signals detected by and/or introduced into said sensor device connected to said generator (21);
- modifying the duty cycle value of said frequency control signal (Scf);
- transmitting said frequency control signal (Scf) to said input terminal (IN) of said receiver (22) to control the operation of said actuator device connected to said receiver (22), and
- interrupting the transmission of said frequency control signal (Scf) during an alarm situation of said actuator device by interrupting a current passage between said generator (21) and said receiver (22).

## Patentansprüche

1. Antriebssystem (20) vom Typ, der mindestens einen Generator (21) und einen Empfänger (22) umfasst, wobei der Generator (21) ein Steuersignal für den Empfänger (22) bereitstellt, wobei der Generator (21) und der Empfänger (22) jeweilige Mikrosteuerungen (23, 27) umfassen und mit Sensor- und Betätigungsvorrichtungen eines Thermoregulierungssystems verbindbar sind, das mittels des Antriebssystems (20) gesteuert wird, wobei das Steuersignal ein Frequenzsteuersignal (Scf) ist und der Generator (21) mindestens eine Frequenzsignal-Erzeugungsschaltung (24) umfasst, die ausgelegt ist, um das Frequenzsteuersignal (Scf) an einem Ausgangsanschluss (OUT) bereitzustellen, der mit einem Eingangsanschluss (IN) des Empfängers (22) verbunden ist, wobei das Frequenzsteuersignal (Scf) den Betrieb einer Betätigungsvorrichtung, die mit dem Empfänger (22) verbunden ist, basierend auf Signalen einstellt, die durch die Sensorvorrichtung, die mit dem Generator (21) verbunden ist, erfasst und/oder in die Sensorvorrichtung eingeleitet werden, dank eines Kodierens übertragener Informationen basierend auf einer Schaltfrequenz mit steigenden und fallenden Flanken des Frequenzsteuersignals (Scf), **dadurch gekennzeichnet, dass** der Empfänger (22) ferner einen galvanischen Abschnitt (30) umfasst, der wiederum einen galvanischen Entkoppler (26) umfasst, der zwischen den Eingangsanschluss (IN) und einen ersten Anschluss (T1) der Mikrosteuerung (27) des Empfängers (22) eingesetzt ist, wobei der galvanische Entkoppler (26) mit dem Eingangsanschluss (IN) mittels eines Sicherheitswiderstands (Rs) verbunden ist und mit einer ersten Massereferenz und mit einer zweiten Massereferenz (GND, GND1) sowie einem weiteren galvanischen Entkoppler (26') mit einer Schaltfunktion verbunden ist, der mit dem galvanischen Entkoppler (26) und mit der Mikrosteuerung (27) des Empfängers (22) verbunden ist, wodurch eine bidirektionale Kommunikation zwischen dem Generator (21) und dem Empfänger (22) bereitgestellt wird, indem der weitere galvanische Entkoppler (26') getrennt und ein Stromdurchgang zwischen dem Generator (21) und dem Empfänger (22) unterbrochen wird, wenn eine Alarmsituation der Betätigungsvorrichtung vorliegt.

2. Antriebssystem (20) nach Anspruch 1, **dadurch gekennzeichnet, dass** der weitere galvanische Entkoppler (26') mit dem galvanischen Entkoppler (26) an einem Schaltungsknoten (X2) und, mittels eines weiteren Sicherheitswiderstands (Rs1), mit einem zweiten Anschluss (T2) der Mikrosteuerung (27) verbunden ist, wobei der weitere galvanische Entkoppler (26') auch mit der ersten und der zweiten Massereferenz (GND, GND1) verbunden ist.

3. Antriebssystem (20) nach Anspruch 2, **dadurch gekennzeichnet, dass** der galvanische Entkoppler (26) ein galvanischer Optokoppler ist, der eine Photodiode, die mit dem Eingangsanschluss (IN) mittels des Sicherheitswiderstands (Rs) und mit dem Schaltungsknoten (X2) verbunden ist, sowie einen Phototransistor, der mit dem ersten Anschluss (T1) der Mikrosteuerung (27) und mit der zweiten Massereferenz (GND1) verbunden ist, umfasst.

4. Antriebssystem (20) nach Anspruch 3, **dadurch gekennzeichnet, dass** der weitere galvanische Entkoppler (26') ein galvanischer Optokoppler ist, der einen Phototransistor, der mit dem Schaltungsknoten (X2) und mit der ersten Massereferenz (GND) verbunden ist, und eine Photodiode, die mit dem zweiten Anschluss (T2) der Mikrosteuerung (27) mittels des weiteren Sicherheitswiderstands (Rs1) und mit der zweiten Massereferenz (GND1) verbunden ist, umfasst.

5. Antriebssystem (20) nach Anspruch 1, **dadurch gekennzeichnet, dass** die Frequenzsignal-Erzeugungsschaltung (24) in der Mikrosteuerung (23) des Generators (21) enthalten ist.

6. Antriebssystem (20) nach Anspruch 1, **dadurch gekennzeichnet, dass** die Mikrosteuerung (23) des Generators (21) zwischen einer ersten Versorgungsspannungsreferenz (Vdd) und einer ersten Massereferenz (GND) eingesetzt ist und die Mikrosteuerung (27) des Empfängers (22) zwischen einer zweiten Versorgungsspannungsreferenz (Vdd1) und einer zweiten Massereferenz (GND1) eingesetzt ist.

7. Antriebssystem (20) nach einem der vorhergehenden Ansprüche, **dadurch gekennzeichnet, dass** der Generator (21) ferner eine Tastgrad-Regelschaltung (25) umfasst, die in der Lage ist, den Tastgrad des Frequenzsteuersignals (Scf) zu verändern, bevor es dem Ausgangsanschluss (OUT) bereitgestellt wird, um mehrere Daten von dem Generator (21) an den Empfänger (22) zu übertragen.

8. Antriebssystem (20) nach Anspruch 7, **dadurch gekennzeichnet, dass** die Tastgrad-Regelschaltung (25) in der Mikrosteuerung (23) des Generators (21) enthalten ist.

9. Antriebssystem (20) nach Anspruch 7 oder 8, **dadurch gekennzeichnet, dass** der Generator (21) ein Kodierungsprotokoll des Frequenzsteuersignals (Scf) basierend auf einer Veränderung seines Tastgrads anwendet, das in der Lage ist, unterschiedliche Codes oder numerische Werte unterschiedlichen Tastgradbereichen und dementsprechend unterschiedlichen Vorgängen, die durch den Empfänger (22) durchgeführt werden, zuzuordnen.

10. Antriebssystem (20) nach einem der vorhergehenden Ansprüche, **dadurch gekennzeichnet, dass** der Generator (21) ferner einen Stromgenerator (28) umfasst, der zwischen der Mikrosteuerung (23) und dem Ausgangsanschluss (OUT) eingesetzt ist, um das Frequenzsteuersignal (Scf) stromzusteuern, wobei der Stromgenerator (28) zwischen eine isolierte Versorgungsspannungsreferenz (Vddi) und eine erste Massereferenz (GND) geschaltet ist.

11. Antriebssystem (20) nach einem der vorhergehenden Ansprüche, **dadurch gekennzeichnet, dass** das Frequenzsteuersignal (Scf), das durch den Generator (21) erzeugt wird, an mehrere Empfänger (22) gesendet wird, die mit mehreren Betätigungsvorrichtungen des Thermoregulierungssystems, das durch das Antriebssystem (20) gesteuert wird, verbunden sind.

12. Thermoregulierungssystem, umfassend mindestens eine Sensorvorrichtung, die mit einer Betätigungsvorrichtung verbunden ist, **dadurch gekennzeichnet, dass** es ein Antriebssystem (20) nach einem der vorhergehenden Ansprüche umfasst und durch dieses Antriebssystem (20) gesteuert wird, wobei die Sensorvorrichtung mit dem Generator (21) verbunden ist und die Betätigungsvorrichtung mit dem Empfänger (22) verbunden ist.

13. Thermoregulierungssystem nach Anspruch 12, **dadurch gekennzeichnet, dass** die Sensorvorrichtung ausgewählt ist aus einem Thermostat, einer Steuereinheit, die ausgelegt ist, manuelle Befehle zu empfangen und/oder die auf einer voreingestellten Programmierung basiert, bzw. einem Computer, und dass die Betätigungsvorrichtung ausgewählt ist aus einem Motor eines Verdichters, eines Gebläses, bzw. eines Gebläseschaufel-Ausrichtungsreglers.

14. Thermoregulierungssystem nach Anspruch 12 oder 13, **dadurch gekennzeichnet, dass** der Generator (21) und der Empfänger (22) des Antriebssystems (20) in jeweiligen elektronischen Steuergeräten der Sensorvorrichtung und der Betätigungsvorrichtung integriert sind.

15. Steuerverfahren zum Steuern einer Betätigungsvorrichtung eines Thermoregulierungssystems nach einem der Ansprüche 12 bis 14 basierend auf Signalen, die durch eine Sensorvorrichtung des Thermoregulierungssystems erfasst und/oder in diese Sensorvorrichtung eingeleitet werden, wobei das System ein Antriebssystem (20) nach einem der Ansprüche 1 bis 11 umfasst, wobei das Verfahren die folgenden Schritte umfasst:
- Verbinden des Generators (21) des Antriebssystems (20) mit der Sensorvorrichtung des Thermoregulierungssystems;
- Verbinden des Empfängers (22) des Antriebssystems (20) mit der Betätigungsvorrichtung des Thermoregulierungssystems;
- Bereitstellen eines Verbindungskabels, das zwischen den Ausgangsanschluss (OUT) des Generators (21) und den Eingangsanschluss (IN) des Empfängers (22) geschaltet ist,
- Erzeugen des Frequenzsteuersignals (Scf) an dem Ausgangsanschluss (OUT) des Generators (21) basierend auf den Signalen, die durch die Sensorvorrichtung, die mit dem Generator (21) verbunden ist, erfasst werden und/oder in diese Sensorvorrichtung eingeleitet werden;
- Modifizieren des Tastgradwerts des Frequenzsteuersignals (Scf);
- Übertragen des Frequenzsteuersignals (Scf) an den Eingangsanschluss (IN) des Empfängers (22), um den Betrieb der Betätigungsvorrichtung, die mit dem Empfänger (22) verbunden ist, zu steuern, und
- Unterbrechen der Übertragung des Frequenzsteuersignals (Scf) während einer Alarmsituation der Betätigungsvorrichtung, indem ein Stromdurchgang zwischen dem Generator (21) und dem Empfänger (22) unterbrochen wird.

## Revendications

1. Système de commande (20) du type comprenant au moins un générateur (21) et un récepteur (22), ledit générateur (21) fournissant un signal de contrôle pour ledit récepteur (22), ledit générateur (21) et ledit récepteur (22) comprenant des microcontrôleurs (23, 27) respectifs et pouvant être connectés respectivement à des dispositifs capteurs et actionneurs d'un système de thermorégulation contrôlé au moyen dudit système de commande (20), ledit signal de contrôle étant un signal de contrôle de fréquence (Scf) et ledit générateur (21) comprenant au moins un circuit de génération de signal de fréquence (24) adapté pour délivrer ledit signal de contrôle de fréquence (Scf) au niveau d'une borne de sortie (OUT) de celui-ci, qui est connectée à une borne d'entrée (IN) dudit récepteur (22), ledit signal de contrôle de fréquence (Scf) réglant le fonctionnement d'un dispositif actionneur connecté audit récepteur (22) sur la base de signaux détectés par et/ou introduits dans ledit dispositif capteur connecté audit générateur (21) grâce à un codage d'informations transmises sur la base d'une fréquence de commutation des fronts montants et descendants dudit signal de contrôle de fréquence (Scf), **caractérisé en ce que** ledit récepteur (22) comprend en outre une partie galvanique (30) comprenant à son tour un découpleur galvanique (26) inséré entre ladite borne d'entrée (IN) et une première borne (T1) dudit microcontrôleur (27) dudit récepteur (22), ledit découpleur galvanique (26) étant connecté à ladite borne d'entrée (IN) au moyen d'une résistance de sécurité (Rs), et étant connecté à une première référence de masse et à une deuxième référence de masse (GND, GND1) et un découpleur galvanique supplémentaire (26') ayant une fonction de commutation, qui est connecté audit découpleur galvanique (26) et audit microcontrôleur (27) dudit récepteur (22), fournissant ainsi une communication bidirectionnelle entre ledit générateur (21) et ledit récepteur (22) en déconnectant ledit découpleur galvanique supplémentaire (26') et interrompant un passage de courant entre ledit générateur (21) et ledit récepteur (22) en présence d'une situation d'alarme dudit dispositif actionneur.

2. Système de commande (20) selon la revendication 1, **caractérisé en ce que** ledit découpleur galvanique supplémentaire (26') est connecté audit découpleur galvanique (26) au niveau d'un nœud de circuit (X2) et, au moyen d'une résistance de sécurité supplémentaire (Rs1), à une deuxième borne (T2) dudit microcontrôleur (27), ledit découpleur galvanique supplémentaire (26') étant également connecté auxdites première et deuxième références de masse (GND, GND1).

3. Système de commande (20) selon la revendication 2, **caractérisé en ce que** ledit découpleur galvanique (26) est un optocoupleur galvanique comprenant une photodiode connectée à ladite borne d'entrée (IN) au moyen de ladite résistance de sécurité (Rs) et audit nœud de circuit (X2), et un phototransistor connecté à ladite première borne (T1) dudit microcontrôleur (27) et à ladite deuxième référence de masse (GND1).

4. Système de commande (20) selon la revendication 3, **caractérisé en ce que** ledit découpleur galvanique supplémentaire (26') est un optocoupleur galvanique comprenant un phototransistor connecté audit nœud de circuit (X2) et à ladite première référence de masse (GND), et une photodiode connectée à ladite deuxième borne (T2) dudit microcontrôleur (27) au moyen de ladite résistance de sécurité supplémentaire (Rs1) et à ladite deuxième référence de masse (GND1).

5. Système de commande (20) selon la revendication 1, **caractérisé en ce que** ledit circuit de génération de signal de fréquence (24) est compris dans ledit microcontrôleur (23) dudit générateur (21).

6. Système de commande (20) selon la revendication 1, **caractérisé en ce que** ledit microcontrôleur (23) dudit générateur (21) est inséré entre une première référence de tension d'alimentation (Vdd) et une première référence de masse (GND), et ledit microcontrôleur (27) dudit récepteur (22) est inséré entre une deuxième référence de tension d'alimentation (Vdd1) et une deuxième référence de masse (GND1).

7. Système de commande (20) selon l'une quelconque des revendications précédentes, **caractérisé en ce que** ledit générateur (21) comprend en outre un circuit de régulation de rapport cyclique (25) en mesure de faire varier le rapport cyclique dudit signal de contrôle de fréquence (Scf) avant de le délivrer à ladite borne de sortie (OUT) afin de transmettre une pluralité de données dudit générateur (21) audit récepteur (22).

8. Système de commande (20) selon la revendication 7, **caractérisé en ce que** ledit circuit de régulation de rapport cyclique (25) est compris dans ledit microcontrôleur (23) dudit générateur (21).

9. Système de commande (20) selon la revendication 7 ou 8, **caractérisé en ce que** ledit générateur (21) applique un protocole de codage dudit signal de contrôle de fréquence (Scf) sur la base d'une variation de son rapport cyclique, en mesure d'associer différents codes ou valeurs numériques à différentes plages de rapport cyclique et, de manière correspondante, à différentes opérations réalisées par ledit récepteur (22).

10. Système de commande (20) selon l'une quelconque des revendications précédentes, **caractérisé en ce que** ledit générateur (21) comprend en outre un générateur de courant (28), inséré entre ledit microcontrôleur (23) et ladite borne de sortie (OUT) pour commander le courant dudit signal de contrôle de fréquence (Scf), ledit générateur de courant (28) étant connecté entre une référence de tension d'alimentation isolée (Vddi) et une première référence de masse (GND).

11. Système de commande (20) selon l'une quelconque des revendications précédentes, **caractérisé en ce que** ledit signal de contrôle de fréquence (Scf) généré par ledit générateur (21) est envoyé à une pluralité de récepteurs (22), connectés à une pluralité de dispositifs actionneurs dudit système de thermorégulation contrôlés par ledit système de commande (20).

12. Système de thermorégulation comprenant au moins un dispositif capteur connecté à un dispositif actionneur, **caractérisé en ce qu'**il comprend et est contrôlé par un système de commande (20) selon l'une quelconque des revendications précédentes, ledit dispositif capteur étant connecté audit générateur (21) et ledit dispositif actionneur étant connecté audit récepteur (22).

13. Système de thermorégulation selon la revendication 12, **caractérisé en ce que** ledit dispositif capteur est choisi parmi un thermostat, une unité de contrôle adaptée pour recevoir des instructions manuelles et/ou basées sur une programmation préétablie, un ordinateur, et **en ce que** ledit dispositif actionneur est choisi parmi un moteur d'un compresseur, d'un ventilateur, d'un régulateur d'orientation d'aubes de ventilateur.

14. Système de thermorégulation selon la revendication 12 ou 13, **caractérisé en ce que** ledit générateur (21) et ledit récepteur (22) dudit système de commande (20) sont intégrés dans des cartes de contrôle électroniques respectives dudit dispositif capteur et dudit dispositif actionneur.

15. Procédé de contrôle pour contrôler un dispositif actionneur d'un système de thermorégulation selon l'une des revendications 12 à 14 sur la base de signaux détectés par et/ou introduits dans un dispositif capteur dudit système de thermorégulation, ledit système comprenant un système de commande (20) selon l'une des revendications 1 à 11, le procédé comprenant les étapes consistant à :
- connecter ledit générateur (21) dudit système de commande (20) audit dispositif capteur dudit système de thermorégulation,
- connecter ledit récepteur (22) dudit système de commande (20) audit dispositif actionneur dudit système de thermorégulation,
- fournir un câble de connexion connecté entre ladite borne de sortie (OUT) dudit générateur (21) et ladite borne d'entrée (IN) dudit récepteur (22),
- générer ledit signal de contrôle de fréquence (Scf) au niveau de ladite borne de sortie (OUT) dudit générateur (21) sur la base desdits signaux détectés par et/ou introduits dans ledit dispositif capteur connecté audit générateur (21),
- modifier la valeur de rapport cyclique dudit signal de contrôle de fréquence (Scf),
- transmettre ledit signal de contrôle de fréquence (Scf) à ladite borne d'entrée (IN) dudit récepteur (22) pour contrôler le fonctionnement dudit dispositif actionneur connecté audit récepteur (22) et
- interrompre la transmission dudit signal de contrôle de fréquence (Scf) pendant une situation d'alarme dudit dispositif actionneur en interrompant un passage de courant entre ledit générateur (21) et ledit récepteur (22).
